(19) Europäisches Patentamt

European Patent Office

Office européen des brevets

(11) **EP 1 120 923 A2**

(12) **EUROPEAN PATENT APPLICATION**

(43) Date of publication:
**01.08.2001 Bulletin 2001/31**

(51) Int Cl.$^7$: **H04B 1/707**

(21) Application number: **01101647.4**

(22) Date of filing: **26.01.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **27.01.2000 JP 2000019267**

(71) Applicant: **NEC CORPORATION
Tokyo (JP)**

(72) Inventor: **Maruyama, Yuichi,
NEC IC Microcomputer Systems Ltd
Kawasaki-shi, Kanagawa (JP)**

(74) Representative: **VOSSIUS & PARTNER
Siebertstrasse 4
81675 München (DE)**

(54) **Rake receiver with low pass filter**

(57)     A rake receiver includes a radio receiving section, a first despreading section, a delay profile calculating section, a synchronization establishing and tracking section, a second despreading section and a demodulating section. The radio receiving section converts a received carrier signal into a spread baseband signal. The first despreading section calculates a correlation value signal from the spread baseband signal using a predetermined spreading code. The delay profile calculating section has an infinite impulse response (IIR) filter section functioning as a low pass filter, and calculates a delay profile from the correlation value signal using the infinite impulse response filter section. The synchronization establishing and tracking section detects phases of a selected path from the delay profile. The second despreading section despreads the baseband signal using the predetermined spreading code in response to each of the selected path phases to produce a despread baseband signal. The demodulating section demodulates the despread baseband signal into a data.

# Fig. 10

## Description

The present invention relates to a radio communication apparatus of a mobile terminal, which employs a spectrum spreading communication system such as a code division multi-access (CDMA) system.

A rake receiver is in a practical use in the field of a portable phone. Specifically, the rake receiver has the functions to receive a radio wave transmitted from a transmitting station by use of a spectrum spreading method, to determine correlation values which indicates correlation between a reception code and a spreading code and to determine a delay profile for carrying out the synchronization establishment and tracking to demodulate a reception data. Various proposals are made for such a rake receiver to improve reception precision, as known from Japanese Laid Open Patent Application (JP-A-Heisei 10-271034: a first conventional example), and Japanese Laid Open Patent Application (JP-A-Heisei 10-313267: a second conventional example).

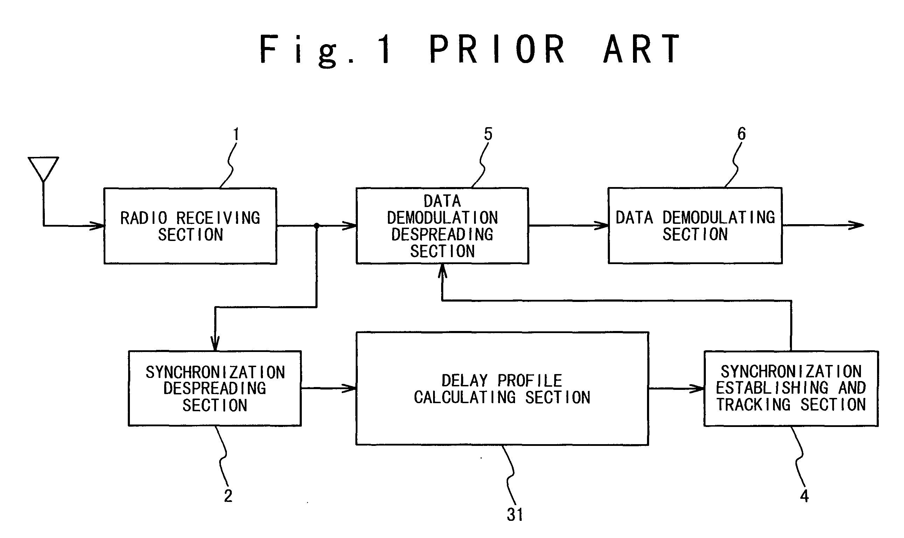

Fig. 1 is a block diagram showing a first conventional example of the rake receiver described in the first conventional example). The rake receiver is provided in a mobile terminal or a fixed station. The rake receiver is composed of a radio receiving section 1, a synchronization despreading section 2, a delay profile calculating section 31, a synchronization establishing and tracking section 4, a data demodulation despreading section 5 and a data demodulating section 6. The radio receiving section 1 receives and samples an analog signal from a reception antenna to convert into a digital spread baseband signal. The synchronization despreading section 2 produces a correlation value signal from the spread baseband signal. The delay profile calculating section 31 calculates a delay profile so-called correlation value table through a filter characteristic of a tandem type filter by a moving average method. The synchronization establishing and tracking section 4 determines the phases of a selected path to carry out the synchronization establishment and tracking to the received radio wave based on this delay profile. The data demodulation despreading section 5 despreads the spread baseband signal based on the selected path phases. The data demodulating section 6 demodulates this despread baseband signal into reception data. It should be noted that the data demodulation despreading section 5 generally uses a plurality of finger circuits. Also, the data demodulating section 6 has a rake section, which synthesizes the outputs of the plurality of finger circuits.

In such a rake receiver, the improvement of the reception precision is attempted by changing a moving average time used for the calculation of the delay profile in the delay profile calculating section 31 and a threshold level of the delay profile needed in the synchronization establishing and tracking section 4 based on the reception state of the radio wave signal, i.e., the reception sensitivity.

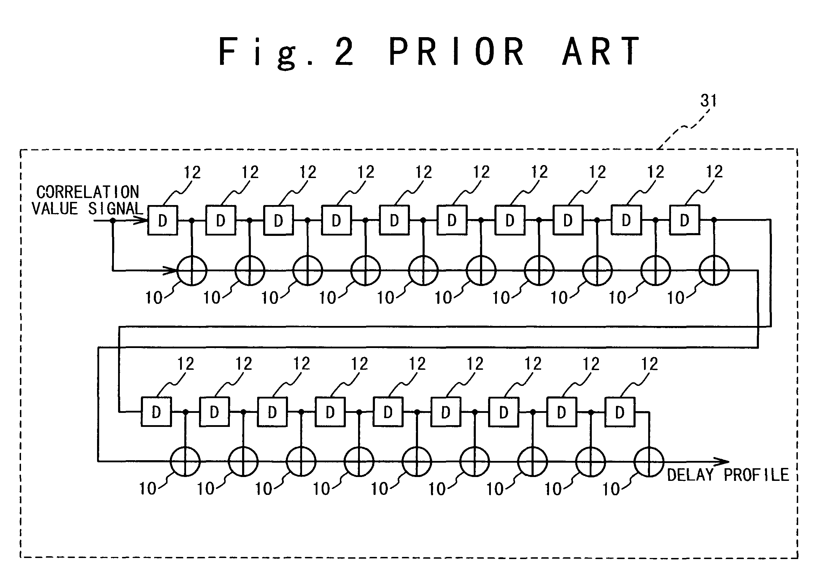

Fig. 2 is a circuit diagram of an example of the delay profile calculating section 31 shown in Fig. 1. As shown in Fig. 2, the delay profile calculating section 31 is a comb-shaped filter, which is composed of a plurality of adders 10, and a plurality of delay units D 12. The delay profile calculating section 31 has a function to input correlation values and to output the delay profile based on the moving average method. That is, this filter calculates a moving average of 20 samples for the input data.

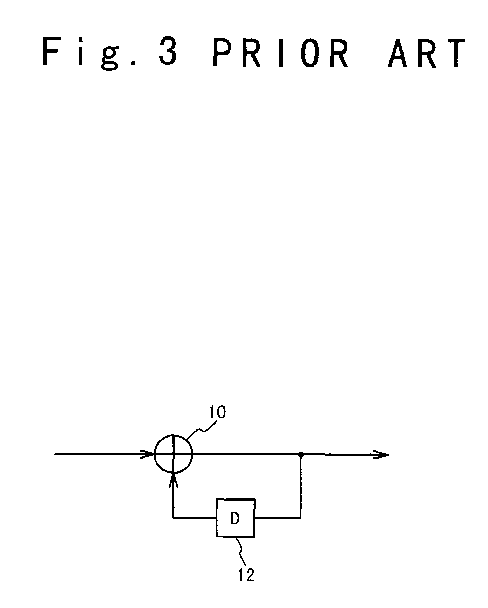

Also, Fig. 3 is a circuit diagram of a second example of the delay profile calculating section 31 shown in Fig. 1. As shown in Fig. 3, the calculating section 31 has an integrating circuit which integrates correlation values by an adder 10 and a delay unit D 12 to determine the delays profile.

In this way, the moving average circuit of the delay profile calculating section 31 shown in Fig. 2 needs many adders and delay units so that the circuit scale becomes large. Also, the integrating circuit of the delay profile calculating section 31 shown in Fig. 3 is conventionally used.

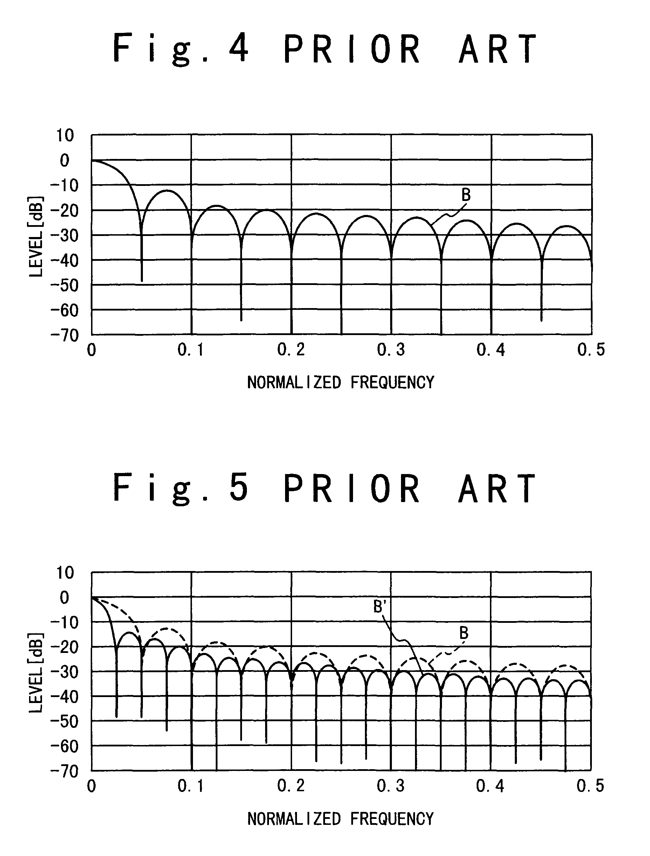

Fig. 4 is a frequency characteristic diagram of the delay profile calculating section shown in Fig. 2. As shown in Fig. 4, the moving average characteristic B of the calculating circuit 31 of Fig. 2 is shown as a comb-shaped filter characteristic. Here, a horizontal axis is a normalized frequency in $\omega$ and a vertical axis is filter output level in dB. In this case, the characteristic B shows the moving average characteristic of the above-mentioned 20 samples and a transfer function is expressed by the following equation (1).

$$H(Z) = \frac{1-Z^{-20}}{20(1-Z^{-1})}$$

Fig. 5 is a frequency characteristic diagram when the filter characteristic of Fig. 4 is switched. As shown in Fig. 5, when the threshold of the delay profile is switched, the moving average characteristic of the calculating circuit 31 of Fig. 2 is shown as the comb-shaped filter characteristic B'. It should be noted that the characteristic B shown by the dotted line in Fig. 5 is identical with the characteristic B shown by the solid line in Fig. 4. In this case, the characteristic B' is the moving average characteristic of 40 samples and the transfer function is expressed by the following equation (2).

$$H(Z) = \frac{1-Z^{-40}}{40(1-Z^{-1})}$$

As mentioned above, when the integrating circuit is used for the delay profile calculating section 31, the delay profile can be produced in the integration period. Also, when the integrating operation time is long, there is a problem that the synchronization establishment and tracking cannot follow a steep temporal change of a selected path. To make the synchronization establishing and tracking possible, a circuit is known in which integration for a short time and the integration for a long time are combined, as described in the second conventional example.

As described in the second conventional example, it could be thought that a moving average circuit of a comb-shaped filter is not used for the delay profile calculating section but the method of moving averages itself is substituted by an integrating operation. That is, the calculating circuit 31 in the second conventional example uses two integrating circuits with different integrating operation times, and a threshold level of the synchronization establishing and tracking section. Also, the values of the delay profile outputted from two integrating circuits are weighted based on the reception state. Thus, by selecting a path phase, it is realized that the simplification of the circuit structure and the improvement of the reception precision can be attempted.

However, even when the integrating circuit is used in the second conventional example, a fundamental problem is never solved that the delay profile can be produced only at the integration period. Also, in the second conventional example, it is necessary to carry out the weighting operation of the delay profile values.

The first and second conventional examples have presupposition that a moving average method and the integration are used for the delay profile calculating section. Here, the moving average characteristic and the integration characteristic have completely the same characteristic when the number of the samples in the moving average method and the number of integration samples (integration periods) are equal to each other. For this reason, the delay profile is calculated by the same method in either of the conventional examples. That is, it could be thought that the moving average circuit and the integrating circuit are a kind of low pass filter. However, the characteristic in a target frequency band is not flat and the attenuation quantity in a frequency band other than the target frequency band is not many in the characteristic. Therefore, it is difficult to remove noise by use of such a filter.

In this case, as the section for removing noise, use of a FIR (finite impulse response) filter circuit may be considered in which a multiplying circuit is connected between the delay circuit 12 and an adding circuit 10 in the moving average filter circuit of Fig. 2. By use of the FIR filter circuit, the noise can be removed in the calculation of the delay profile. In this case, however, the circuit scale becomes larger and it is not realistic.

In short, in the conventional examples, when an integrating circuit is used for the delay profile calculating section, there is a problem that the delay profile can be produced only in the integration period. Also, when a moving average circuit and an integrating circuit are used for a delay profile calculating section, there is another problem that the noise cannot be sufficiently removed from the viewpoint of the filter characteristic, so that path phases are erroneously detected in the synchronization establishing and tracking section.

Moreover, when it becomes easy to detect erroneous path phases by the synchronization establishing and tracking section, the reliability of the output of the data demodulation spreading section which operates based on the detecting result is degraded in quality, resulting in degradation of reception precision.

In conjunction with the above description, a spectrum spreading type receiver is disclosed in Japanese Laid Open Patent Application (JP-A-Heisei 9-270734). In this reference, a delay wave phase determining circuit 10 is provided to determine whether a currently detected delay wave has the same phase of a previously detected delay wave. Also, the delay wave phase determining circuit 10 outputs a delay wave switching signal when the phase of the currently detected delay wave is different. When the delay wave switching signal a is turned on based on a signal obtained by carrying out a despreading operation by a second despreading circuit 7 and the delay wave switching signal a, a demodulating circuit 9 demodulates the first half of a reception signal which is previous to a timing when the signal a is turned on, using a phase estimated based on the first known signal without interpolating the phase estimated based on the first and second known signals which are inserted on both ends of an information signal. The second half of the reception signal after the timing when the signal a is turned on is demodulated using the phase estimated based on the second known signal, to prevent the degradation of reception quality.

Also, a Doppler frequency measuring circuit and a synchronizing circuit is disclosed in Japanese Laid Open Patent Application (JP-A-Heisei 10-51356). In this reference, a delay profile 12 is measured by a delay profile measuring section 11 and supplied to a Doppler frequency measuring section 13. The Doppler frequency measuring section 13 measures a Doppler frequency 14 from time change of the delay profile 12. A time constant 16 of the filter and a switching interval 21 of main wave and delay wave are selected based on the Doppler frequency 14 by circuits 18 and 20. The selected data are applied to the averaging operation of the delay profile 12 and the selection of the main wave and the delay wave so that it is possible to measure precious summation of frequency 17 by an IIR filter 15 (or a FIR filter) and to preciously select the main wave and the delay wave by a main wave and delay wave selecting circuit 19, resulting in demodulation of a high quality signal.

Also, a CDMA mobile communication receiver is disclosed in Japanese Laid Open Patent Application (JP-A-Heisei 10-271034). In this reference, a mobile receiver is provided with a delay profile calculating section 103 and a moving average time control section 105. The delay profile calculating section 103 carries out a moving average method to correlation values in accordance with a moving average time specified by the moving average time control section 105 to calculate a delay profile. The moving average time control section 105 measures the time change of a selected path to determine the moving average time. The moving average time control section 105 shortens the moving average time when the selected path time change is large, and make it long when the change is small. The path movement can follow a rapid time change of the selected path as the result of the high speed movement of a communication device by controlling the moving average time of the delay profile. Therefore, the synchronization establishing and tracking performance can be improved so that the reception quality is also improved.

Also, a spectrum spreading communication synchronization establishing and demodulating apparatus is described in Japanese Patent No. 2850959. In this reference, a data is modulated and then spectrum-spread using a spreading code to be transmitted as a spectrum spread signal. The spectrum spread signal as a reception signal is demodulated into the data. For this purpose, a spectrum spreading synchronizing circuit is provided for a radio communication apparatus to reproduce the data by despreading the spectrum spread signal by use of the same spreading code. In the spectrum spreading code synchronizing circuit, a signal converting section converts a reception signal into a baseband signal. A sample hold circuit samples and holds the baseband signal and outputs a sampling signal. Each of first correlation units calculates correlation between the sampling signal and the spreading code to obtain a first correlation value. A symbol integrator inversely modulates the first correlation value based on symbol theoretical value corresponding to the first correlation value or a determination value after demodulation if unknown symbol, carries out symbol addition of a plurality of symbols, and calculates symbol addition power values. A short time integration path search section adds the power values for a plurality of slots and selects the addition results for the number of the first correlation units from the larger addition results for one slot. A long integration path search section adds the power values for a plurality of slots which are larger than the plurality of slots in the short time integration path search section and selects the addition results for a the number of the first correlation units from the larger addition results for one slot. A demodulation path selection section selects demodulation reception timings from the timings selected by the short integration path search section and the long integration path search section in order of the larger power for one slot. A second correlation unit calculates correlation between the reception signal and the spreading code signal based on the demodulation reception timings to obtain a second correlation value. A radio detector detects a detection signal from the correlation value. A signal synthesis section outputs the determination value based on a synthetic signal which is obtained by carrying out RAKE synthesis or space diversity synthesis to the detection signal for respective paths.

Therefore, an object of the present invention is to provide a rake receiver which can be realized in a small circuit scale.

Another object of the present invention is to provide a rake receiver which can determine path phases in a high precision.

Still another object of the present invention is to provide a rake receiver which can remove noise of a delay profile so that demodulation data can be obtained in a high reception precision.

In order to achieve an aspect of the present invention, a rake receiver includes a radio receiving section, a first despreading section, a delay profile calculating section, a synchronization establishing and tracking section, a second despreading section and a demodulating section. The radio receiving section converts a received carrier signal into a spread baseband signal. The first despreading section calculates a correlation value signal from the spread baseband signal using a predetermined spreading code. The delay profile calculating section has an infinite impulse response (IIR) filter section functioning as a low pass filter, and calculates a delay profile from the correlation value signal using the infinite impulse response filter section. The synchronization establishing and tracking section detects phases of a selected path from the delay profile. The second despreading section despreads the baseband signal using the predetermined spreading code in response to each of the selected path phases to produce a despread baseband signal. The demodulating section demodulates the despread baseband signal into a data.

The infinite impulse response filter section may include first and second adders, first and second delay units and first to fourth multipliers. The first adder adds the correlation value signal and first and second delay data to produce a first addition result. The first delay unit delays the first addition result by a first predetermined time to output a first delay result. The second delay unit delays the first delay result by a second predetermined time to output a second delay result. The first multiplier multiplies the first delay result by a first predetermined coefficient to produce the first delay data. The second multiplier multiplies the second delay result by a second predetermined coefficient to produce the second delay data. The third multiplier multiplies the first delay result by a third predetermined coefficient to produce a third delay data. The fourth multiplier multiplies the second delay result by a fourth predetermined coefficient to produce the fourth delay data. The second adder adds the third and fourth delay data and the first addition result to produce a second addition result as the delay profile.

In this case, the first predetermined time is preferably equal to the second predetermined time. Also, when the first despreading section uses at least four multipliers for calculating the correlation value signal, it is desirable that the first to fourth multipliers are used for calculating the correlation value signal in the first despreading section. Also, the rake receiver may further include a filter coefficient setting section which sets the first to fourth predetermined coefficients. Also, the infinite impulse response filter section may have a following transfer function H(Z):

$$H(z) = \frac{b_0 + b_1 Z^{-1} + b_2 Z^{-2}}{a_0 + a_1 Z^{-1} + a_2 Z^{-2}}$$

where a0 and b0 are predetermined constants, respectively, and a1, a2, b1 and b2 are the first to fourth predetermined coefficients, respectively.

Also, the infinite impulse response filter section may include first and second adders, first and second delay units and first to fifth multipliers. The first multiplier multiplies the correlation value signal by a first predetermined coefficient to produce a multiplied correlation value signal. The first adder adds the multiplied correlation value signal and first and second delay data to produce a first addition result. The first delay unit delays the first addition result by a first predetermined time to output a first delay result. The second delay unit delays the first delay result by a second predetermined time to output a second delay result. The second multiplier multiplies the first delay result by a second predetermined coefficient to produce the first delay data. The third multiplier multiplies the second delay result by a third predetermined coefficient to produce the second delay data. The fourth multiplier multiplies the first delay result by a fourth predetermined coefficient to produce a third delay data. The fifth multiplier multiplies the second delay result by a fifth predetermined coefficient to produce the fourth delay data. The second adder adds the third and fourth delay data and the first addition result to produce a second addition result as the delay profile.

In this case, the first predetermined time is preferably equal to the second predetermined time. Also, the rake receiver may further include a filter coefficient setting section which sets the first to fourth predetermined coefficients. Also, the infinite impulse response filter section may have a following transfer function H(Z):

$$H(z) = K \frac{b_0 + b_1 Z^{-1} + b_2 Z^{-2}}{a_0 + a_1 Z^{-1} + a_2 Z^{-2}}$$

where a0 and b0 are predetermined constants, respectively, and K, a1, a2, b1 and b2 are the first to fifth predetermined coefficients, respectively.

Also, the infinite impulse response filter section includes a plurality of infinite impulse response (IIR) filters which are cascade-connected. At this time, each of plurality of infinite impulse response (IIR) filters may include first and second adders, first and second delay units and first to fourth multipliers. The first adder adds the correlation value signal and first and second delay data to produce a first addition result. The first delay unit delays the first addition result by a first predetermined time to output a first delay result. The second delay unit delays the first delay result by a second predetermined time to output a second delay result. The first multiplier multiplies the first delay result by a first predetermined coefficient to produce the first delay data. The second multiplier multiplies the second delay result by a second predetermined coefficient to produce the second delay data. The third multiplier multiplies the first delay result by a third predetermined coefficient to produce a third delay data. The fourth multiplier multiplies the second delay result by a fourth predetermined coefficient to produce the fourth delay data. The second adder adds the third and fourth delay data and the first addition result to produce a second addition result as the delay profile.

In this case, the first predetermined time is preferably equal to the second predetermined time. Also, the infinite impulse response filter section may have a following transfer function H(Z):

$$H(z) = \frac{b_0 + b_1 Z^{-1} + b_2 Z^{-2}}{a_0 + a_1 Z^{-1} + a_2 Z^{-2}}$$

where a0 and b0 are predetermined constants, respectively, and a1, a2, b1 and b2 are the first to fourth predetermined coefficients, respectively.

In another aspect, a method of demodulating data from a received signal, is attained by (a) converting a received carrier signal into a baseband signal; by (b) calculating a correlation value signal from the baseband signal using a predetermined spreading code; by (c) calculating a delay profile from the correlation value signal using an infinite impulse response (IIR) filter functioning as a low pass filter; by (d) detecting phases of a selected path based on the delay profile; by (e) despreading the baseband signal using the predetermined spreading code in response to each of the selected path phases to produce a despread baseband signal; and by (f) demodulating the despread baseband signal to output a data.

The (c) calculating a delay profile may be attained by (g) adding the correlation value signal and first and second delay data to produce a first addition result; by (h) delaying the first addition result by a first predetermined time to output a first delay result; by (i) delaying the first delay result by a second predetermined time to output a second delay result; by (j) multiplying the first delay result by a first predetermined coefficient to produce the first delay data; by (k) multiplying the second delay result by a second predetermined coefficient to produce the second delay data; by (1) multiplying the first delay result by a third predetermined coefficient to produce a third delay data; by (m) multiplying the second delay result by a fourth predetermined coefficient to produce the fourth delay data; and by (n) adding the third and fourth delay data and the first addition result to produce a second addition result as a delay profile.

In this case, the first predetermined time is preferably equal to the second predetermined time.

Also, the (c) calculating a delay profile may be attained by calculating the delay profile from the correlation value signal using the IIR filter having a following transfer function H(Z):

$$H(z) = \frac{b_0 + b_1 Z^{-1} + b_2 Z^{-2}}{a_0 + a_1 Z^{-1} + a_2 Z^{-2}}$$

where a0 and b0 are predetermined constants, respectively, and a1, a2, b1 and b2 are the first to fourth predetermined coefficients, respectively.

Also, the method may further include switching the first to fourth predetermined coefficients based on a reception state of the received carrier signal.

In order to still another aspect of the present invention, a program for executing the steps of: (g) adding the correlation value signal and first and second delay data to produce a first addition result; (h) delaying the first addition result by a first predetermined time to output a first delay result; (i) delaying the first delay result by a second predetermined time to output a second delay result; (j) multiplying the first delay result by a first predetermined coefficient to produce the first delay data; (k) multiplying the second delay result by a second predetermined coefficient to produce the second delay data; (l) multiplying the first delay result by a third predetermined coefficient to produce a third delay data; (m) multiplying the second delay result by a fourth predetermined coefficient to produce the fourth delay data; and (n) adding the third and fourth delay data and the first addition result to produce a second addition result as a delay profile.

## Brief Description of the Drawings

Fig. 1 is a block diagram showing a conventional example of a rake receiver;

Fig. 2 is a circuit diagram of an example of a delay profile calculating section of Fig. 1 using a moving averages method;

Fig. 3 is a circuit diagram of anther example of the delay profile calculating section shown in Fig. 1;

Fig. 4 is a frequency characteristic diagram of the delay profile calculating section of Fig. 2;

Fig. 5 is a frequency characteristic diagram of the delay profile calculating section of Fig. 2 when the filter characteristic is switched;

Fig. 6 is a block diagram showing the structure of a rake receiver according to the first embodiment of the present invention;

Fig. 7 is a circuit diagram showing a delay profile calculating section with an IIR filter shown in Fig. 6;

Fig. 8 is a frequency characteristic diagram showing the delay profile calculating section shown in Fig. 6;

Fig. 9 is an expanded diagram of a passable frequency band in frequency characteristic shown in Fig. 8;

Fig. 10 is a block diagram showing the structure of the rake receiver according to a second embodiment of the present invention; and

Fig. 11 is a frequency characteristic diagram of a delay profile calculating section shown in Fig. 10.

## Description of the Preferred Embodiments

Hereinafter, a rake receiver of the present invention will be described below in detail with reference to the attached drawings.

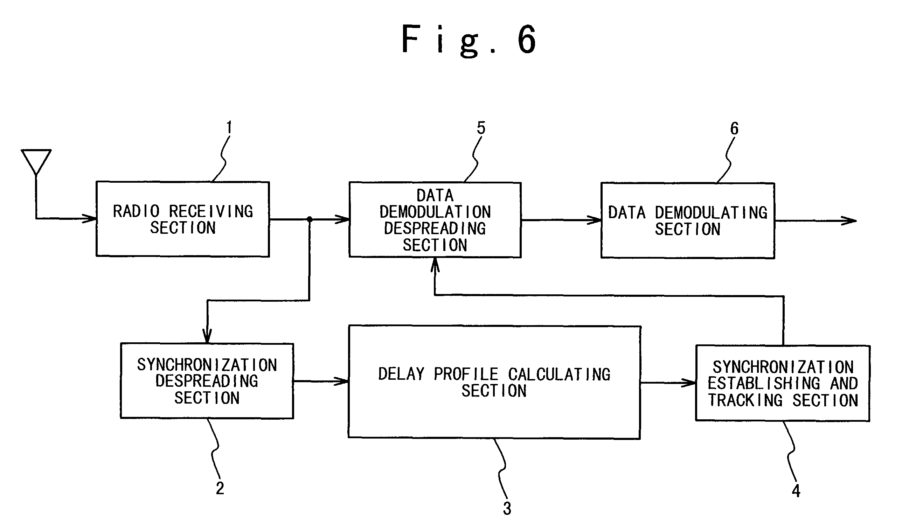

Fig. 6 is a block diagram of a rake receiver showing the first embodiment of the present invention. As shown in Fig. 6, the rake receiver in the first embodiment is composed of a radio receiving section 1, a synchronization despreading section 2, a delay profile calculating section 3, a synchronization establishing and tracking section 4, a data demodulation despreading section 5 and a data demodulating section 6. The radio receiving section 1 converts a received reception carrier signal from an antenna into a spread baseband signal. The synchronization despreading section 2 inputs this spread baseband signal and outputs a correlation value by calculating correlation of the spread baseband signal with a spreading code determined for the system. The delay profile calculating section 3 having an IIR filter inputs the correlation value and calculates a delay profile from the correlation value. The synchronization establishing and tracking section 4 inputs this delay profile and the above-mentioned spread baseband signal and detects the phases of a selected path. The data demodulation despreading section 5 inputs the selected path phases and the base band spreading signal and despreads the spread baseband signal in the timings of the selected path phases by use of the spreading code determined for the system. The data demodulating section 6 demodulates this despread baseband signal into the data. In this case, the IIR filter used in the delay profile calculating section 3 is a low pass filter which has a flat frequency characteristic in a passable frequency band and moreover has a steep attenuating frequency characteristic in a frequency band out of the passable frequency band.

Next, an operation of the rake receiver having the above structure will be described. First, the radio receiving section 1 converts the signal of a carrier frequency which has been received by the antenna into a complex spread baseband signal. The synchronization despreading section 2 inputs the complex spread baseband signal, and carries out complex multiplication of a complex conjugate of the predetermined spreading code for the system and the complex spread baseband signal while shifting timing, and sums the complex multiplication result for a symbol time. Thus, correlation values at the respective spreading timings are calculated and outputted. The correlation value has a large value only when the synchronization with the spreading code can be taken. That is, the large correlation value means that a position of the synchronization establishment with the selected path is known.

The delay profile calculating section 3 having the IIR filter carries out a filtering process to the correlation values at the respective timings by use of the IIR type low pass filter with a flat characteristic in the passable frequency band to produce the delay profile. The delay profile can be obtained in which the interference from other stations and the influence of noise are removed by carrying out the filtering process. As a result, the synchronization establishing and tracking section 4 can obtain the delay profile with high reliability. Therefore, if the synchronization tracking is carried out based on the delay profile, the phases of the selected path become correct and the transmission data can be obtained in the high reception precision by the data demodulation despreading section 5 and the data demodulating section 6.

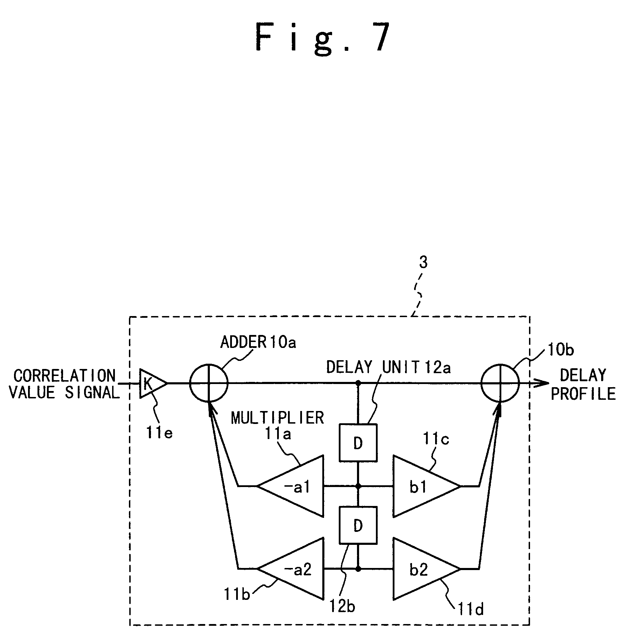

Fig. 7 is a circuit diagram showing the structure of the delay profile calculating section 2 with the IIR filter shown in Fig. 6. As shown in Fig. 7, the calculating section is composed of fist and second adders 10a and 10b, first and second delay units 12a and 12b, and first and fifth multiplier 11a to 11e. The fifth multiplier 11e multiplies a correlation value signal by K. The first adder 10a adds the output of this multiplier 11e and first and second delay data. The first delay unit 12a delays the addition output of the first adder 10a by a predetermined time and outputs a first delay result. The second delay unit 12b delays the first delay result outputted from the first delay unit 12a by the same time as that of the delay time of the first delay unit 12a and outputs a second delay result. The first and second multipliers 11a and 11b multiply the first and second delay results by predetermined coefficients (-a1) and (-a2), respectively to produce the above-mentioned first and second delay data for feeding back them to the first adder 10a. The third and fourth multipliers 11c and 11d multiply the first and second delay results by predetermined coefficients (-b1) and (-b2), respectively to produce third and fourth delay data. The second adder 10b adds the third and fourth delay data produced by the third and fourth multipliers 11c and 11d to the addition output of the first adder 10a, to produce a delay profile.

The above-mentioned IIR filter circuit is composed of a so-called 1D type circuit structure which is known to be adaptive for a time divisional process without any addition of a new register when the calculation elements are used in the time divisional manner. According to such a circuit structure, the adders 10 and the delay units 12 can be largely reduced, compared with the above-mentioned conventional example of Fig. 2.

When the adder 10 is used in the time divisional process, the scale of the delay unit 12 is a problem. However, it could be understood that the IIR filter circuit in this embodiment is smaller in circuit scale. Also, in the IIR filter circuit in this embodiment, the multipliers 11a to 11d which are not shown in Fig. 2 are added. However, these multipliers 11a to 11d are not specially provided only for an IIR filter calculation. That is, the multipliers may be used for calculating the correlation values in the time divisional manner. In this way, in this embodiment, a 1-D type filter is selected as the structure of the IIR filter. Therefore, the calculating section can be realized in the circuit scale equal to or less than that of the conventional example.

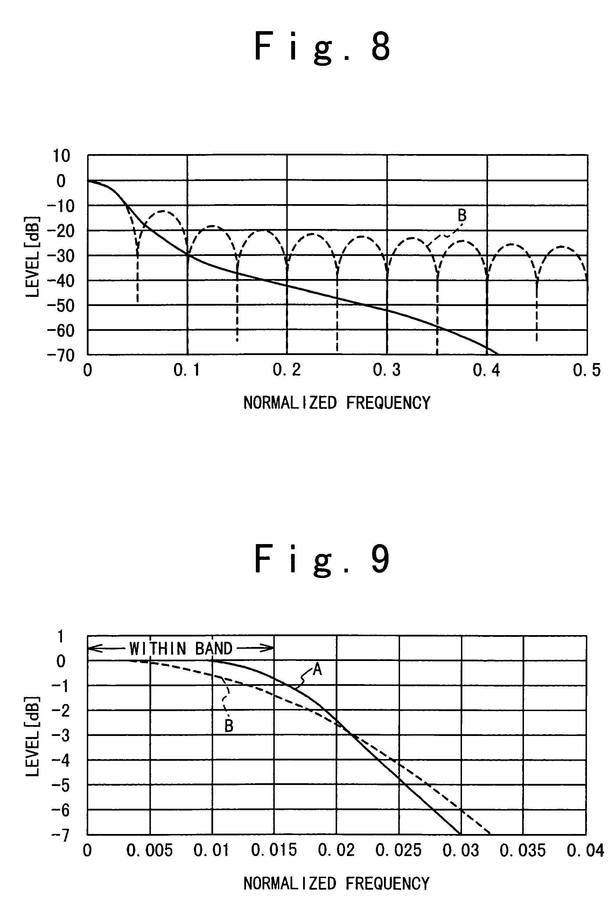

Fig. 8 is a frequency characteristic diagram of the delay profile calculating section of Fig. 6, and also Fig. 9 is an expanded frequency characteristic diagram showing the passable low frequency band in Fig. 8. The frequency characteristic A of the IIR low pass filter used at this time has a flat characteristic in the passable low frequency band and a large attenuation in a cut-off frequency band out of the low frequency band, compared with the above-mentioned conventional moving averages characteristic B. The transfer function of this filter is shown by the following transfer function equation.

$$H(z) = K \frac{b_0 + b_1 Z^{-1} + b_2 Z^{-2}}{a_0 + a_1 Z^{-1} + a_2 Z^{-2}}$$

where the coefficients are K=0.00362991, b0=1, b=2, b2=1, a0=1, a1=-1.8225, a2=0.837012, respectively. The values of b0 and al are predetermined. These values are an example of the coefficients which has the second order Butterworth characteristic, and the better characteristic can be achieved by substituting it by the higher order filter or a filter type.

In this way, in the first embodiment, it is important to use a filter with better characteristic than the above-mentioned conventional moving average filter. At this time, it is possible to consider that the low frequency band corresponds to the continuation time of an effective selected path. To make the continuation time of the path long is equivalent to the narrow band, and also to make the continuation time of the effective path short is equivalent to a wide band. That is, because the characteristic is flat in the passable low frequency band, the characteristic is constant between the path with a short continuation time and the path with a long continuation time. Therefore, the path after the continuation time elapses can be surely captured. Therefore, the delay profile produced by use of this filter is inputted to the synchronization establishing and tracking section 4. The synchronization establishing and tracking section 4 selects the timings for N larger ones of the delay profile values and outputs each timing as the selected path phase for the rake synthesis.

The timing of the incoming wave of the transmission data to the rake receiver changes with the temporal change of the channel. At this time, the synchronization establishing and tracking section 4 outputs the timings to follow the temporal change. Also, because the data demodulation despreading section 5 is composed of N finger circuits, and the N selected path phases are allocated to the N finger circuits. Each finger circuit demodulates data at the allocated timing, and the data demodulating section 6 can rake-synthesize the baseband signals despread by each finger circuit to output as the reception data.

As mentioned above, according to the first embodiment of the present invention, the removal of the interference from the other stations and the influence of noise is carried out by the flat IIR type low pass filter with a flat characteristic in a passable low frequency band, in case of the production of the delay profile. Therefore, the noise of the delay profile can be more surely removed. For this reason, the synchronization establishing and tracking section 4 operates based on the delay profile with less noise and the performance of the synchronization establishment and tracking can be improved highly and the reception precision can be improved.

The above-mentioned example is a case where the filter is one. However, when a filter structure of higher order, (second order, fourth order and so on) is used by connecting a plurality of filters in a cascade manner, the better noise removal characteristic can be realized. In this case, each filter has the same structure as shown in Fig. 7.

Next, the rake receiver according to the second embodiment of the present invention will be described. Like the above-mentioned first embodiment, the rake receiver according to the second embodiment is used for the receiving section of the radio communication apparatus for the spectrum spreading (SS) communication, or a rake receiver in which selection of path phases can be precisely carried out when the synchronization establishment and tracking between the reception signal and the spreading code are carried out. At that time, an IIR filter is provided for the delay profile calculating section and a filter coefficient switching section is further provided to switch the filter coefficients of this filter in accordance with the reception state. In this way, the cut-off frequency of the filter can be changed so that the reception precision can be improved in accordance with the reception state.

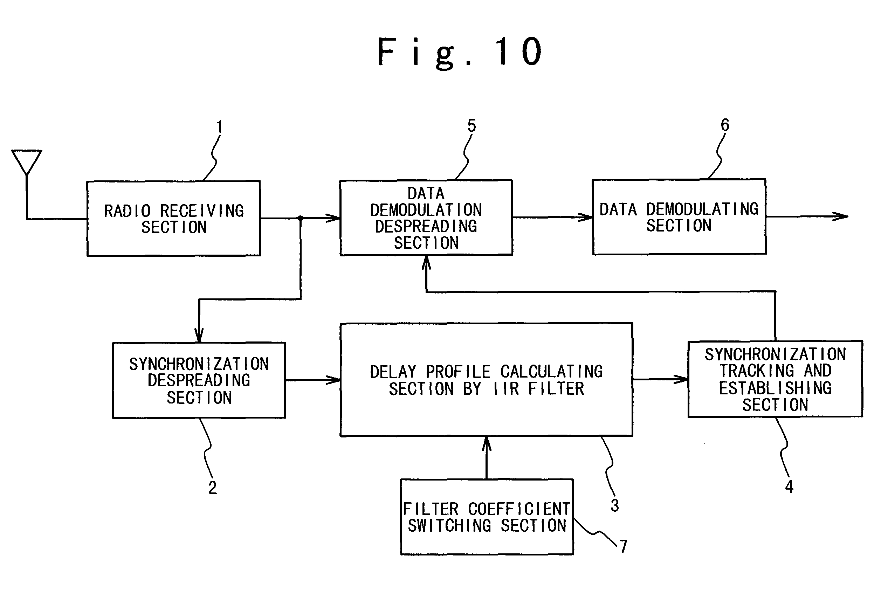

Fig. 10 is a block diagram showing the structure of the rake receiver according to the second embodiment of the present invention. As shown in Fig. 10, this embodiment is characterized in that a filter coefficient switching section 7 is provided, compared with the above-mentioned first embodiment. Because the other components are same, the description of them is omitted. Here, a case that a receiving apparatus is stopped or moved at low speed is detected and the coefficients are switched to coefficients for a narrow frequency band so as to obtain the more stable delay profile.

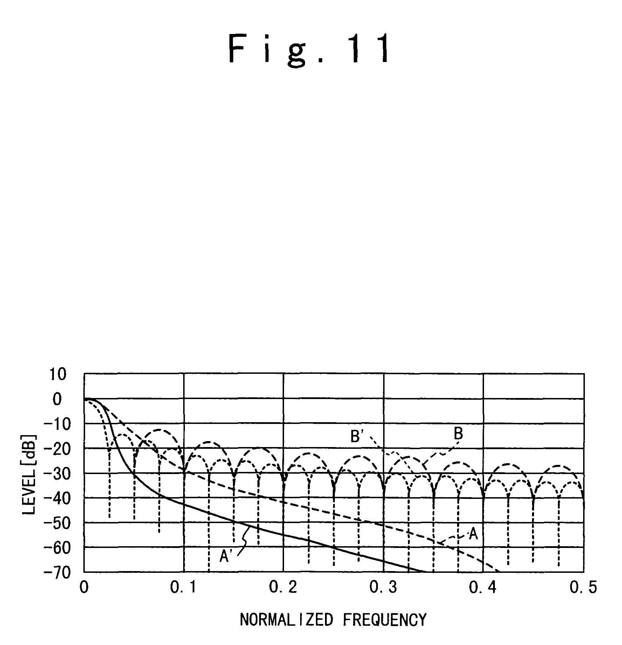

Fig. 11 is a frequency characteristic diagram of the delay profile calculating section of Fig. 10. When the filter coefficients are switched by this filter coefficient switching section 7, frequency characteristic A' can be achieved, as shown in Fig. 11. It should be noted that the characteristic A is the same characteristic shown in Fig. 9, and characteristics B and B are the characteristics shown in Fig. 4 and Fig. 5. At this time, the transfer function of the filter when the coefficients are switched is shown by the above-mentioned equation (3). For example, the characteristic A' as shown in Fig. 11 can be realized by use of the coefficients of K=0.000946888, b0=1, b1=2, b2=1, a0=1, a1=-1.9111, and a2=0.991488.

Various modifications of the present invention are possible in addition to these. For example, a high-speed movement of a receiver is detected so that the coefficients are switched to the coefficients for the wide frequency band so as to achieve the more stable delay profile. Especially, in the case of high-speed movement, because there is no steady path phases, the delay profile can be achieved by adding the DC cut-off characteristic.

Also, the filtering process by the IIR filter may be executed by a software program which is recorded in a recording medium and loaded into the receiver.

As described above, in the present invention, an IIR filter with the flat characteristic in the low passable frequency band is used for the delay profile calculating section. As a result, the delay profile from which the interference from the other stations and the influence of the noise are removed can be obtained, compared with the delay profile which has been produced by the conventional moving average method. Therefore, the synchronization establishing and tracking performance of the synchronization establishing and tracking section operating based on the delay profile with less noise can be improved. Thus, it is possible to improve the demodulation data quality.

Also, in the present invention, because the second order IIR filter is used, the present invention can be realized in a circuit scale smaller than the conventional circuit which uses the moving average method for a plurality of samples.

Moreover, in the present invention, it is possible to obtain a delay profile in which the interference from the other stations and the influence of the noise are removed by increasing the order of the IIR filter. As a result, it is possible to further improve a demodulated data quality. Also, in the present invention, parallel calculation circuits becomes possible by using not a 1 D-type IIR filter but a 2 D-type filter, so that it is possible to carry out the higher-speed delay profile calculation.

## Claims

1. A rake receiver comprising:

a radio receiving section which converts a received carrier signal into a baseband signal;

a first despreading section which calculates a correlation value signal from said baseband signal using a predetermined spreading code;

a delay profile calculating section which has an infinite impulse response (IIR) filter section functioning as a low pass filter, and calculates a delay profile from said correlation value signal using said infinite impulse response filter section;

a synchronization tracking section which detects phases of a selected path based on said delay profile;

a second despreading section which despreads said baseband signal using said predetermined spreading code in response to each of said selected path phases to produce a despread baseband signal; and

a demodulating section which demodulates said despread baseband signal to output a data.

2.  The rake receiver according to claim 1, wherein said infinite impulse response filter section comprises:

    a first adder which adds said correlation value signal and first and second delay data to produce a first addition result;

    a first delay unit which delays said first addition result by a first predetermined time to output a first delay result;

    a second delay unit which delays said first delay result by a second predetermined time to output a second delay result;

    a first multiplier which multiplies said first delay result by a first predetermined coefficient to produce said first delay data;

    a second multiplier which multiplies said second delay result by a second predetermined coefficient to produce said second delay data;

    a third multiplier which multiplies said first delay result by a third predetermined coefficient to produce a third delay data;

    a fourth multiplier which multiplies said second delay result by a fourth predetermined coefficient to produce said fourth delay data; and

    a second adder which adds said third and fourth delay data and said first addition result to produce a second addition result as said delay profile.

3.  The rake receiver according to claim 1, wherein said infinite impulse response filter section comprises:

    a first multiplier which multiplies said correlation value signal by a first predetermined coefficient to produce a multiplied correlation value signal;

a first adder which adds said multiplied correlation value signal and first and second delay data to produce a first addition result;

a first delay unit which delays said first addition result by a first predetermined time to output a first delay result;

a second delay unit which delays said first delay result by a second predetermined time to output a second delay result;

a second multiplier which multiplies said first delay result by a second predetermined coefficient to produce said first delay data;

a third multiplier which multiplies said second delay result by a third predetermined coefficient to produce said second delay data;

a fourth multiplier which multiplies said first delay result by a fourth predetermined coefficient to produce a third delay data;

a fifth multiplier which multiplies said second delay result by a fifth predetermined coefficient to produce said fourth delay data; and

a second adder which adds said third and fourth delay data and said first addition result to produce a second addition result as said delay profile.

4.  The rake receiver according to claim 1, wherein said infinite impulse response filter section includes a plurality of infinite impulse response (IIR) filters which are cascade-connected, and each of which comprises:

    a first adder which adds an input signal and first and second delay data to produce a first addition result;

    a first delay unit which delays said first addition result by a first predetermined time to output a first delay result;

    a second delay unit which delays said first delay result by a second predetermined time to output a second delay result;

    a first multiplier which multiplies said first delay result by a first predetermined coefficient to produce said first delay data;

    a second multiplier which multiplies said second delay result by a second predetermined coefficient to produce said second delay data;

    a third multiplier which multiplies said first delay result by a third predetermined coefficient to produce a third delay data;

    a fourth multiplier which multiplies said second delay result by a fourth predetermined coefficient to produce said fourth delay data; and

    a second adder which adds said third and fourth delay data and said first addition result to produce a second addition result,

    wherein a first one of said plurality of IIR filters inputs said correlation value signal and a last one of said plurality of IIR filters outputs said second addition result as said delay profile.

5. The rake receiver according to any of claims 2 to 4, wherein said first predetermined time is equal to said second predetermined time.

6. The rake receiver according to claim 2 or 4, wherein said first despreading section uses at least four multipliers for calculating said correlation value signal, and

said first to fourth multipliers are used for calculating said correlation value signal in said first despreading section.

7. The rake receiver according to claim 3, wherein said first despreading section uses at least four multipliers for calculating said correlation value signal, and

said second to fifth multipliers are used for calculating said correlation value signal in said first despreading section.

8. The rake receiver according to claim 2 or 4, further comprising:

a filter coefficient setting section which sets said first to fourth predetermined coefficients.

9. The rake receiver according to claim 3, further comprising:

a filter coefficient setting section which sets said first to fifth predetermined coefficients.

10. The rake receiver according to any of claims 2 to 4, wherein said infinite impulse response filter section has a following transfer function H(Z):

$$H(z) = \frac{b_0 + b_1 Z^{-1} + b_2 Z^{-2}}{a_0 + a_1 Z^{-1} + a_2 Z^{-2}}$$

where a0 and b0 are predetermined constants, respectively, and a1, a2, b1 and b2 are said first to fourth predetermined coefficients, respectively.

11. A method of demodulating data from a received signal, comprising:

(a) converting a received carrier signal into a baseband signal;
(b) calculating a correlation value signal from said baseband signal using a predetermined spreading code;
(c) calculating a delay profile from said correlation value signal using an infinite impulse response (IIR) filter functioning as a low pass filter;
(d) detecting phases of a selected path based on said delay profile;
(e) despreading said baseband signal using said predetermined spreading code in response to each of said selected path phases to produce a despread baseband signal; and
(f) demodulating said despread baseband signal to output a data.

12. The method according to claim 11, wherein said (c) calculating a delay profile comprises:

(g) adding said correlation value signal and first and second delay data to produce a first addition result;
(h) delaying said first addition result by a first predetermined time to output a first delay result;
(i) delaying said first delay result by a second predetermined time to output a second delay result;
(j) multiplying said first delay result by a first predetermined coefficient to produce said first delay data;
(k) multiplying said second delay result by a second predetermined coefficient to produce said second delay data;
(l) multiplying said first delay result by a third predetermined coefficient to produce a third delay data;
(m) multiplying said second delay result by a fourth predetermined coefficient to produce said fourth delay data; and
(n) adding said third and fourth delay data and said first addition result to produce a second addition result as a delay profile.

13. The method according to claim 12, wherein said first predetermined time is equal to said second predetermined time.

14. The method according to claim 11, wherein said (c) calculating a delay profile includes:

calculating said delay profile from said correlation value signal using said IIR filter having a following transfer function H(Z):

$$H(z) = \frac{b_0 + b_1 Z^{-1} + b_2 Z^{-2}}{a_0 + a_1 Z^{-1} + a_2 Z^{-2}}$$

where a0 and b0 are predetermined constants, respectively, and a1, a2, b1 and b2 are said first to fourth predetermined coefficients, respectively.

15. The method according to claim 12, further comprising:

switching said first to fourth predetermined coefficients based on a reception state of said re-

ceived carrier signal.

# Fig. 1 PRIOR ART

RADIO RECEIVING SECTION — 1

DATA DEMODULATION DESPREADING SECTION — 5

DATA DEMODULATING SECTION — 6

SYNCHRONIZATION DESPREADING SECTION — 2

DELAY PROFILE CALCULATING SECTION — 31

SYNCHRONIZATION ESTABLISHING AND TRACKING SECTION — 4

# Fig. 2 PRIOR ART

EP 1 120 923 A2

# Fig. 3 PRIOR ART

# Fig. 4 PRIOR ART

NORMALIZED FREQUENCY

# Fig. 5 PRIOR ART

NORMALIZED FREQUENCY

# Fig. 6

RADIO RECEIVING SECTION ‎1

DATA DEMODULATION DESPREADING SECTION ‎5

DATA DEMODULATING SECTION ‎6

SYNCHRONIZATION DESPREADING SECTION ‎2

DELAY PROFILE CALCULATING SECTION ‎3

SYNCHRONIZATION ESTABLISHING AND TRACKING SECTION ‎4

EP 1 120 923 A2

# Fig. 7

# Fig. 8

# Fig. 9

# Fig. 10

EP 1 120 923 A2

# Fig. 11